# EUROPEAN PATENT SPECIFICATION

(11) **EP 4 201 778 B1**
(45) Date of publication and mention of the grant of the patent: **22.01.2025**
(21) Application number: 22203904.2
(22) Date of filing: 26.10.2022
(51) Int. Cl.: B60W 50/02, B60W 50/029, B60W 60/00

(54) **AUTONOMOUS DRIVING SAFETY CONTROL SYSTEM BASED ON EDGE INFRASTRUCTURE AND METHOD THEREOF**
AUTONOMES FAHRSICHERHEITSSTEUERUNGSSYSTEM AUF BASIS EINER EDGE-INFRASTRUKTUR UND VERFAHREN DAFÜR
SYSTÈME DE COMMANDE DE SÉCURITÉ DE CONDUITE AUTONOME BASÉ SUR UNE INFRASTRUCTURE PÉRIPHÉRIQUE ET PROCÉDÉ ASSOCIÉ

(30) Priority: 22.12.2021 KR 20210185170
(43) Date of publication of application: 28.06.2023
(73) Proprietor: KIAPI (Korea Intelligent Automotive Parts Promotion Institute), Dalseong-gun, Daegu 43011 (KR)
(72) Inventor: Lee, Myung Su, 42999 Daegu (KR); Yun, Hyeong Seok, 42995 Daegu (KR); Kim, Bong Seob, 41584 Daegu (KR); Yun, Kyung Su, 43019 Daegu (KR); Lim, Tae Ho, 41197 Daegu (KR)
(74) Representative: Gulde & Partner

(56) References cited:
- WO-A1-2020/205597
- KR-A- 20210 029 859
- KR-B1- 102 000 395
- US-A1- 2020 070 847
- HUANG JIE ET AL: "Research on Development and Application of Roadside Edge Equipment and Edge Cloud Based on Intelligent Network Connection", 2021 IEEE 5TH INFORMATION TECHNOLOGY,NETWORKING,ELECTRONIC AND AUTOMATION CONTROL CONFERENCE (ITNEC), IEEE, vol. 5, 15 October 2021 (2021-10-15), pages 137 - 142, XP034011814, DOI: 10.1109/ITNEC52019.2021.9586954

## Description

### BACKGROUND

### Field

The present invention relates to an autonomous driving safety control system based on an edge infrastructure capable of securing safety of vehicle passengers in a fallback situation.

### Description of the Related Art

Recently, research on intelligent vehicle technologies, such as autonomous driving and driver assistance systems (DAS), has been actively conducted. In addition, technology research on autonomous vehicles and connected vehicles using on-road infrastructure and communication information has also been actively conducted, and in order to secure the safety of vehicle passengers in a fallback situation during autonomous driving, various technologies have been developed, released, or advanced.

In addition, various institutional devices have heen prepared for the safety of passengers in relation to autonomous driving and DAS. For example, the National Highway Traffic Safety Administration (NHTSA) has established a standard for a minimal risk state system (a fallback system) as a standard for minimizing the risk when a problem arises in highly autonomous vehicles.

Here, the minimal risk state system specifies detecting failure classification of an autonomous driving system, possible cancellation risk states, environmental factors, etc. and handing over a driving subject to a person in the event of a problem. Here, a fallback situation refers to situations that correspond to various risk factors that occur during autonomous driving as described above.

However, in the event of the fallback situation, the existing autonomous driving system has been proposed to focus on the control of a vehicle (e.g., speed control, minimal risk maneuver (MRM) to switch driver control, emergency stop in a safety zone of the vehicle), but securing the safety of vehicle passengers is insufficient.

That is, the conventional autonomous driving and DAS focus on technologies related to detection of a fallback situation and vehicle control and does not secure safety for a driver and passengers of vehicles.

KR 102 000 395 B1 relates to a device for switching a driving mode of an autonomous vehicle so that a vehicle can be safely driven according to the state and type of the disabled function when at least some of the functions of the autonomous vehicle are disabled, a method therefor and a computer-readable recording medium having recorded thereon a program for performing the method. KR 2021 0029859 A relates to a vehicle for performing minimal risk manipulation when a specific event occurs during driving and a method of operating the vehicle.

US 2020/070847 Al relates to an electronic control device of a vehicle including an action prediction unit that predicts the action of an object around the vehicle on the basis of external information acquired from external information detection units that detect external information of the vehicle. WO 2020/205597 A1 relates to computing systems enabling autonomous vehicles.

### [Related art document]

### [Patent document]

(Patent document 1) KR 10-2279309 B1

### SUMMARY OF THE INVENTION

An aspect of the present invention is to provide an autonomous driving safety control system based on edge infrastructure and method thereof, capable of controlling switching a control right of a vehicle and/or vehicle with priority on the safety of a passenger by interworking with an edge infrastructure in a fallback situation that occurs during autonomous driving.

In an aspect, an autonomous driving safety control system based on edge infrastructure includes: an autonomous driving system controlling autonomous driving; an error detection unit detecting a fallback situation; and a safety controller driving a safety process for each fallback situation by interworking with an edge infrastructure when a fallback situation occurs. When (i.e., in case) the error detection unit detects a fallback situation in which it is impossible to switch a driving control right to a driver, and either autonomous driving of the autonomous driving system is impossible, or a fallback minimal risk maneuver (MRM) set in the autonomous driving system itself is impossible and location information of a safety zone where an emergency stop is possible is not received, the safety controller makes an emergency stop by controlling the autonomous driving system in conjunction with the edge infrastructure, transmits the fallback situation and location information by detecting a location of a passenger who escapes to the outside of the vehicle, and shares the location information of the passenger through the edge infrastructure.

In another aspect, an autonomous driving safety control method based on edge infrastructure includes: a) controlling an autonomous vehicle in an autonomous driving system, b) detecting a fallback situation during autonomous driving, and c) selecting any one of a plurality of scenarios set for ball back situations, and performing a safety process according to the selected scenario. In c), when (i.e., in case) a fallback situation is detected in which it is impossible to switch a driving control right to a driver in b), and in which either autonomous driving of the autonomous driving system is impossible, or in which a fallback minimal risk maneuver (MRM) set in the autonomous driving system itself is impossible in b) and a location of a safety zone in which emergency stop is possible has not been found by searching for said location of a safety zone through the edge infrastructure and self-sensing, the safety process is controlling and emergency-stopping the autonomous driving system by interworking with the edge infrastructure, transmitting the fallback situation and location information by detecting a location of a passenger who escapes to the outside of the vehicle, and sharing the location information of the passenger through the edge infrastructure.

According to the present invention, safety of passengers of an autonomous vehicle may be improved by providing various safety scenarios on the premise of safety of passengers in a fallback situation occurring during autonomous driving.

### BRIEF DESCRIPTION OF THE DRAWING FIGURES

FIG. 1 is a block diagram illustrating an autonomous driving safety control system based on an edge infrastructure according to the present invention.
FIG. 2 is a block diagram illustrating an error detection unit of FIG. 1.
FIG. 3 is a block diagram illustrating a safety controller.
FIG. 4 is a flowchart illustrating an autonomous driving safety control method based on an edge infrastructure according to the present invention.
FIG. 5 is a flowchart illustrating step S300.
FIGS. 6 and 7 are diagrams illustrating step S410.
FIGS. 8 and 9 are diagrams illustrating step S420.
FIGS. 10 and 11 are diagrams illustrating step S430.
FIGS. 12 and 13 are diagrams illustrating step S440, which relates to an essential scenario of the present invention as claimed.

### DETAILED DESCRIPTION OF THE EMBODIMENTS

Although the present invention may have various changes and may have various embodiments, specific embodiments will be described in detail with reference to the drawings. The present invention is not limited to the specific embodiments, and should be understood as corresponding to any one of all modifications, equivalents or substitutes included in the scope of the present invention as defined in the appended claims for connecting and/or fixing structures extending in different directions.

The terms used herein are used only to describe specific embodiments, and are not intended to limit the present invention. As used herein, the singular forms "a", "an", and "the" are intended to include the plural forms as well, unless the context clearly indicates otherwise.

It will be further understood that the terms "comprises" "comprising," "includes", and/or "including" when used herein, specify the presence of stated features, integers, steps, operations, elements, and/or components, but do not preclude the presence or addition of one or more other features, steps, operations, elements, components, and/or groups thereof.

In the present invention, a fallback situation refers to a failure of an autonomous driving system 100 included in the standard of the minimal risk state system (fallback system) prepared by the National Highway Traffic Safety Administration (NHTSA), a risk condition, and environmental factors.

In the present invention, an edge infrastructure may include a server connected to a peripheral vehicle equipped with a terminal capable of performing edge computing in the vicinity of an autonomous vehicle through a data repeater.

Hereinafter, embodiments of an autonomous driving safety control system based on an edge infrastructure and a method thereof according to the present invention will be described with reference to the accompanying drawings.

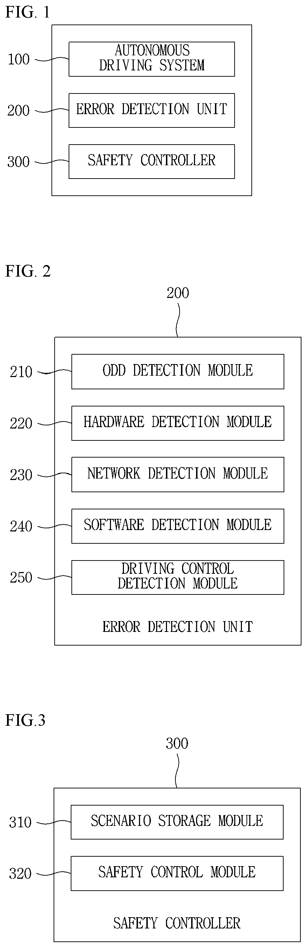

FIG. 1 is a block diagram illustrating an autonomous driving safety control system based on an edge infrastructure according to the present invention.

Referring to FIG. 1, the present invention includes an autonomous driving system 100 controlling autonomous driving, an error detection unit 200 detecting a fallback situation, and a safety control 300 driving a safety process according to a set scenario when a fallback situation occurs.

The autonomous driving system 100 controls a vehicle in an autonomous driving mode. For example, the autonomous driving system 100 may perform route setting, autonomous driving, and vehicle control, and may include front and rear sensors, such as LiDAR and Radar, an operation design domain (ODD), a battery, network equipment, and the like.

Here, the autonomous driving system 100 may establish a minimal risk strategy according to a fallback minimal risk condition system to minimize a risk when a problem arises in an autonomous vehicle standardized by the National Highway Traffic Safety Administration (NHTSA).

The error detection unit 200 detects an error and a fallback situation of hardware, software, and a vehicle driving device (e.g., an engine, a steering device, a braking device, and a battery) of the autonomous driving system. Here, the error detection unit 200 will be described with reference to FIG. 2.

FIG. 2 is a block diagram illustrating the error detection unit 200 of FIG. 1.

Referring to FIG. 2, the error detection unit 200 may include an ODD detection module 210, a hardware detection module 220, a network detection module 230, a software detection module 240, and a driving control detection module 250.

The dual ODD detection module 210 detects a malfunction of an ODD defining specific operating conditions of an automated driving system (ADS) and/or an object and event detection and response (OEDR).

Here, the ODD is a driving range, which is a rule set for testing and implementing ADS performance of an autonomous vehicle. That is, the ODD detection module 210 may detect a driving range set in the ODD of the autonomous vehicle and whether the ADS is operating.

The OEDR is set up to enable the ADS to detect obstacles that may affect a safe operation of other vehicles (including on and off pedestrian routes), pedestrians, cyclists, animals, and obstacles, and respond appropriately thereto. For example, the ODER includes responses to general driving situations and expected crash scenarios from ADS.

Therefore, the ODD detection module 210 detects a driving section of an autonomous vehicle according to the section and rule set in the ODD and ODER as described above, the ability to respond to an object and event, and whether the ADS malfunctions.

The hardware detection module 220 detects a malfunction of hardware installed in the autonomous vehicle. The autonomous vehicle includes multiple electronic equipment required for autonomous driving, such as cameras, EPS torque sensors, lidar sensors, and radar sensors. The hardware detection module 220 detects a malfunction of hardware equipment necessary for autonomous driving.

The network detection module 230 detects a malfunction of network equipment in the autonomous vehicle. For example, the autonomous vehicle may have communication equipment that may interwork a GPS and an edge infrastructure. The network detection module 230 may detect a malfunction and an operating state of the network equipment as described above.

The software detection module 240 detects a malfunction of software installed in the autonomous vehicle. For example, the software detection module detects a communication state of data between various hardware (e.g., an electronic control unit (ECU), a camera, a lidar sensor, or a radar sensor) installed in the autonomous vehicle to detect a malfunction of software through whether data is received, the amount of received data, and a data type.

The driving control detection module 250 detects a malfunction while the vehicle is driving. For example, the driving control detection module 250 detects a driving-related malfunction, such as longitudinal to lateral control, stop, and speed control of the vehicle as an operation of the autonomous driving system 100.

When an error is detected through the error detection unit 200, the safety controller 300 safely-controls the autonomous vehicle for each scenario set according to an error type. This will be described with reference to FIG. 3.

FIG. 3 is a block diagram illustrating a safety controller.

Referring to FIG. 3, the safety controller 300 includes a scenario storage module 310 storing a plurality of scenarios set for each fallback situation detected by the error detection unit 200 and a safety control module 320 controlling the autonomous driving system 100 according to the scenarios.

The scenario storage module 310 sets a plurality of scenarios to ensure the safety of passengers according to a fallback situation. Various scenarios, for example, whether autonomous driving is possible, switching a control right to a driver, emergency stop in a safety zone, vehicle control of the autonomous driving system 100, and vehicle emergency stop are set.

The safety control module 320 may check and receive any one of the scenarios set according to the fallback situation detected by the error detection unit 200 and surrounding situation information, establish a response strategy, and control the autonomous driving system 100.

Here, the safety control module 320 receives, from the error detection unit 200, whether the autonomous driving system 100 is operating normally (HW, SW, NW, autonomous driving function) before starting autonomous driving, and when the autonomous driving system 100 normally operates, the safety control module 320 sets a route, and then controls the autonomous driving system 100 to start the autonomous driving operation.

The safety control module 320 performs vehicle control by checking whether the ODD is operated through recognition/determination on an object or environment during autonomous driving through a detection signal from the error detection unit 200, and repeatedly performs vehicle control unless there is no problem in the system.

Alternatively, the safety control module 320 may determine an abnormal case (a sensor failure, a system defect, a network error, etc.) of the autonomous driving system 100 and a case out of the ODD as a fallback situation, and after transmitting an emergency call, the safety control module 320 performs a safety process in conjunction with the existing connected edge infrastructure to secure driver safety.

At this time, the role of edge infrastructure is controlling to share information on dangerous situations for surrounding vehicles and to obtain and repeat surrounding situation information (sensed information of nearby vehicles such as traffic volume, a safety zone location, weather, road conditions, presence, and speed of vehicles in the front and rear and adjacent lanes, etc.).

That is, the safety control module 320 may control to share a fallback situation with a surrounding vehicle or to share sensing information of the surrounding vehicle, such as location information such as a safety zone and a road condition through the edge infrastructure, and request an emergency dispatch and rescue from a set control center, maintenance company, and organizations such as the police and fire stations.

Here, when an uncontrollable situation is detected by determining whether autonomous driving control is possible, the safety control module 320 may lead to either switching a driver's control right, maintaining vehicle control of the autonomous driving system, or emergency stop of the vehicle depending on whether the driver's control right is switched.

Alternatively, if the autonomous driving control is possible and it is impossible to switch the driver's control right, the safety control module 320 may directly control the autonomous driving system 100 according to a set scenario or directly control the vehicle by any one of scenarios among directly controlling the autonomous driving system 100 or safety zone emergency stop and vehicle emergency stop, and performs the set safety process.

The safety process is performed according to scenarios, such as driver control right switching, safety zone emergency stop, vehicle control of the autonomous driving system 100, and vehicle emergency stop.

Dual driver control switching is switching a driving control right of the vehicle to the driver after a fallback situation is detected, and if a partial operation is possible through a partial operation of the autonomous driving system 100, a response strategy that includes a route may be established and guided by using the surrounding location or traffic information through interworking with the edge infrastructure.

In addition, the safety zone emergency stop is a scenario for securing a safety zone, moving the autonomous vehicle to a safety zone to correspond to a surrounding situation, and then emergency-stopping the autonomous vehicle by interworking with the edge infrastructure and moving an autonomous vehicle to the safety zone and emergency-stopping the autonomous vehicle if a partial operation is possible through controlling the autonomous driving system 100, whether a driving right is to be switched, and by determining whether the autonomous driving system 100 performs a partial operation.

In the vehicle control of the autonomous driving system 100, the safety control module 320 may control the autonomous driving system 100 according to whether the control right is switched and whether autonomous driving control is possible, and a response strategy linked to the edge infrastructure may be supported.

Vehicle emergency stop is a scenario of emergency-stopping the vehicle according to a surrounding situation through linking with the edge infrastructure when it is determined that partial operation is possible through determination of whether autonomous driving is possible, whether driving right is switched, and whether the autonomous driving system 100 is partially operated.

Here, in the vehicle emergency stop scenario, which relates to an essential scenario of the present invention as claimed, the safety of passengers from secondary accidents is promoted by sharing location information of passengers who escaped from the vehicle after stopping the vehicle with surrounding vehicles through edge infrastructure.

For example, in the scenario, when a passenger escapes after an emergency stop, the safety control module 320 determines the location of a person who has escaped the vehicle as a partial operation function of the autonomous driving system 100, and a current situation is propagated to nearby vehicles or control centers through the edge infrastructure or V2X communication technology and the safety of the passenger of the vehicle who has escaped in emergency is secured according to the provided information.

Here, the safety control module 320 is different from the conventional ecall and V2P functions. For example, in the case of the existing ecall, the VIN information of an accident vehicle and location information of a vehicle are sent, and the passenger's escape status and location information are not included. In addition, in the case of V2P, a person should have a wireless communication device, and there may be cases where the wireless device may be left behind in case of an emergency evacuation.

However, in the present invention, the safety control module 320 is configured to interwork with an edge infrastructure, so that a fallback situation and location information of a passenger may be transmitted and received, thereby offsetting the disadvantages of the related art.

Preferably, during communication, the safety control module 320 may transmit an emergency signal including current coordinate information, the number of passengers, and a current location to a set terminal of surrounding vehicles, maintenance companies, control centers, and nearby public institutions to transmit a fallback situation, passenger location information, and an emergency call.

The present invention includes the configuration as described above, and a method for controlling the safety of an autonomous vehicle according to the present invention will be described below.

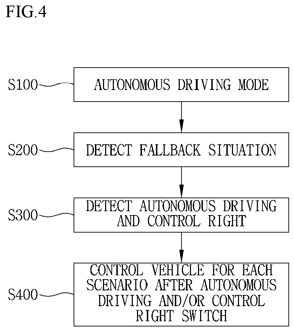

FIG. 4 is a flowchart illustrating an autonomous driving safety control method based on an edge infrastructure according to the present invention.

Referring to FIG. 4, the present invention includes step S 100 for controlling an autonomous vehicle, step S200 for detecting an error of the autonomous vehicle, step S300 for detecting whether autonomous driving is possible and whether the control right is switched, and step S400 of executing safety control according to a scenario set according to an error type.

Step S100 is a step in which the autonomous driving system 100 controls the vehicle in the autonomous driving mode after starting. The autonomous driving system 100 starts autonomous driving by checking whether the system operates normally in a stopped state before starting or after starting and setting and/or checking an input route.

Step S200 is a step for detecting whether a fallback situation occurs during autonomous driving in step S100. For example, the error detection unit 200 detects errors in the ODD, hardware, software, network, vehicle control device, and function. Here, when a fallback situation is detected, the safety controller may transmit an emergency call signal according to the fallback situation to a set terminal (e.g., a control center, a server and/or terminal of an institution or an individual).

In addition, the safety control module 320 may receive surrounding information (e.g., traffic conditions, emergency stop locations and routes) in conjunction with the edge infrastructure and propagate the situation to nearby vehicles equipped with a terminal capable of edge computing.

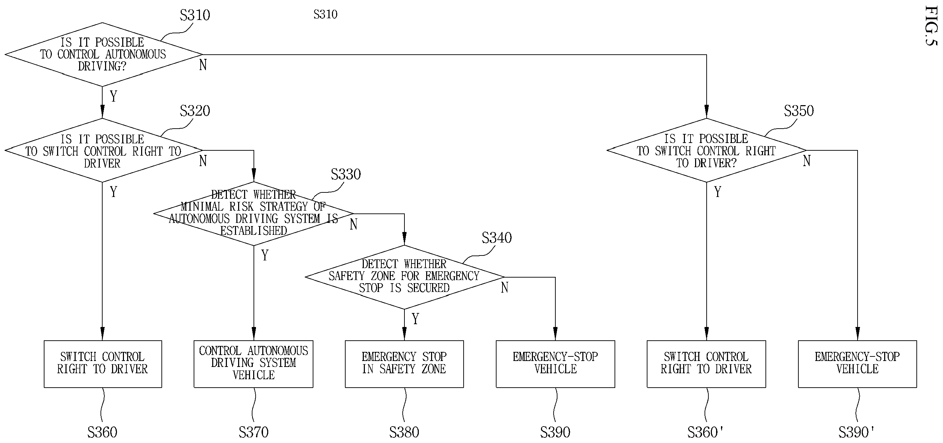

Step S300 is a step of selecting an executable passenger safety scenario according to whether autonomous driving is possible and whether driving control is switched. Such step S300 will be described with reference to FIG. 5.

FIG. 5 is a flowchart illustrating step S300.

Referring to FIG. 5, step S300 may include step S310 in which the safety controller detects whether autonomous driving is possible, steps S320 and S350 in which whether a driver control is switched is detected, step S330 in which whether a minimal risk strategy is established is detected, and step S340 in which whether an emergency stop safety zone is secured is detected.

Step S310 is a step in which the safety controller detects whether autonomous driving control is possible by checking the type of failure after receiving the error detection signal of the error detection unit 200.

For example, when a fallback situation occurs, if an error related to autonomous driving occurs in hardware, software, and ODD, the safety controller detects that autonomous driving is not possible and proceeds to step S350 to detect whether manual operation of the driver may be switched.

Conversely, the safety controller checks a type of error, and when the error is not an error set in relation to autonomous driving, the safety controller detects that autonomous driving is possible and performs step S320.

Step S320 is a step in which the safety controller detects switching of the driver's control right when an error in which autonomous driving is possible is detected. Here, when the detected error corresponds to the driver's control right switching condition, the safety controller proceeds to step S3 50 to switch the control right of the autonomous driving system 100 to the driver.

Step S360 is a step in which the safety controller switches the driver's control right so that the driver may control the vehicle by switching from an autonomous driving mode to a manual mode. Therefore, the driver may directly drive the vehicle manually.

Thereafter, the safety controller may establish a safety response strategy (safety response information) for the driver in conjunction with the edge infrastructure and proceed with the safety process to provide it to the driver. The safety process will be described later through step S400.

Alternatively, if the detected error does not correspond to the driver's control right switching condition, the safety controller proceeds to step S330.

Step S330 is a step in which the safety controller detects whether it corresponds to a set minimal risk strategy (fallback minimal risk condition) of the autonomous driving system 100.

As described above, the minimal risk strategy corresponds to various scenarios and/or setting conditions set according to whether devices capable of coping with various dangerous situations occurring in the autonomous driving mode are normally operated. In other words, the minimal risk strategy may or may not be implemented depending on a normal operation of sensors capable of predicting and detecting dangerous situations and hardware, software, and mechanical devices required to change the longitudinal to lateral direction of the vehicle.

Therefore, if the driver's control right switching is possible, the safety controller checks whether to continuously control the vehicle of the autonomous driving system 100 in step S370 or whether emergency stop in the safety zone is secured in step S340 depending on whether it is possible or impossible to establish the minimal risk strategy set as above.

Step S370 is a step in which when it is detected that the establishment of the minimal risk strategy of the autonomous driving system 100 is possible, the safety controller 300 maintains vehicle control of the autonomous driving system 100. Accordingly, the autonomous vehicle may continue to operate under the control of the autonomous driving system.

Step S340 is a step in which the safety controller detects a location of the emergency stop safety zone if it does not correspond to the set conditions for establishing the minimal risk strategy in step S330. Here, information on the emergency stop safety zone may be requested and/or received through the edge infrastructure, or may be confirmed through its own sensor.

Therefore, for example, when the location and route of the safety zone where the emergency stop of the vehicle is possible is confirmed through the detection information of a preceding vehicle connected through the edge infrastructure, the safety controller proceeds to step S3 80 to emergency-stop the autonomous vehicle in the safety zone.

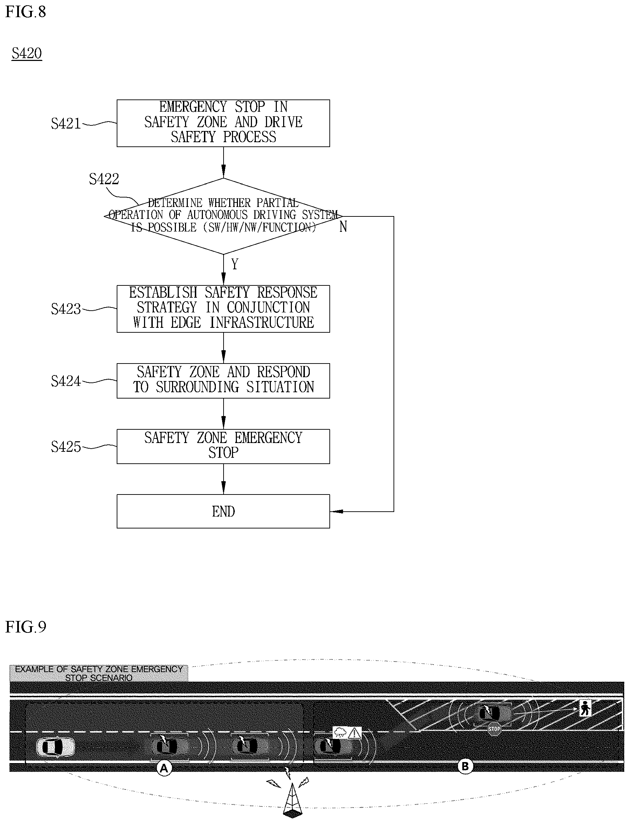

Step S380 will be described later with reference to FIGS. 8 and 9 as a safety zone emergency stop safety process.

Alternatively, if the safety controller cannot secure the emergency stop safety zone by checking the edge infrastructure or surrounding information in step S340, the safety controller proceeds to step S390 to emergency-stop the vehicle and proceeds to the safety process of step S400.

Step S350 is a step of detecting whether it is possible to switch the driver's control right in a state where autonomous driving control is impossible. Here, the safety controller may perform step S3 60' to switch the control right to the driver if the driver's control right may be switched, and proceed to step S390' to emergency-stop the autonomous vehicle when it is not possible to switch the control right to the driver.

That is, after the safety controller performs any one of the driver's control right switching, vehicle control of the autonomous driving system 100, safety zone emergency stop, and vehicle emergency stop in a state in which autonomous driving is possible or impossible and in a state in which the driver's control right may be switched or not, the safety controller may proceed with the safety process of passengers. Each of these safety processes corresponds to step S400.

In step S400, after any one of a plurality of set scenarios is performed according to whether the autonomous driving system 100 is capable of autonomous driving and whether the driving control right may be switched from automatic to manual mode, a safety process of establishing and providing a response strategy in conjunction with the edge infrastructure is performed to increase safety of passengers.

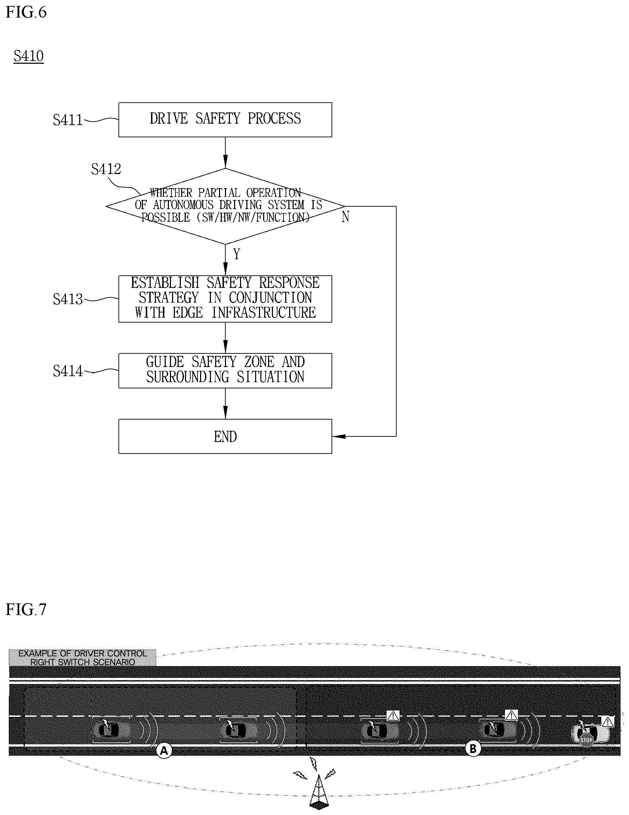

Such a passenger safety process will be described with reference to FIGS. 6 to 13.

FIG. 6 is a diagram illustrating a step S410, and FIG. 7 is a diagram illustrating an example of driver control right switching.

Referring to FIG. 6, step S410 includes step S411 of driving the safety process, step S412 of detecting whether the autonomous driving system 100 is partially operated, step S413 of establishing a safety response strategy in conjunction with edge infrastructure, and step S414 of guiding a safety zone and surrounding conditions.

Step S411 is a step in which the safety controller drives a safety process. For example, if it is difficult to control autonomous driving and switching the driver's control right is possible, the safety controller switches the control right to the driver so that the driver may directly control the vehicle by manually switching the driving control right, and then the safety controller performs the safety process.

Step S412 is a step in which the safety controller detects whether the autonomous driving system 100 is partially operated. For example, the safety controller detects whether hardware, software, network equipment, and vehicle functions of the autonomous driving system 100 are partially operated. Here, the safety controller detects whether essential components for establishing a response for a minimal risk strategy are normally operated in the driver's manual driving mode.

In step S413, according to a result of detecting whether the autonomous driving system 100 is partially operated, when the normal operation of components necessary for establishing a minimal risk strategy during manual driving of the driver is confirmed, the safety controller performs a safety response in conjunction with the edge infrastructure.

Step S414 is a step in which the safety controller guides the established response strategy to the driver and/or passengers. The response strategy established here may include one or more of safety zone guidance, environment, topography, geography, and traffic information, and each information may be selected and collected according to a current location and route of the autonomous vehicle and a failure causing the fallback situation.

A specific case will be described with reference to FIG. 7 for the safety process after the driver's control right is switched.

Referring to FIG. 7, in a road divided into zone (A) and zone (B), autonomous vehicles are operating normally in conjunction with the edge infrastructure in the case of zone (A) (left side of FIG. 7).

In the case of zone (B) (right side in FIG. 7), a fallback situation occurs due to a sensor or hardware failure of the vehicle while driving, and the driving control is switched to the driver through step S360 or S360'.

At this time, the road situation is a foggy situation in which a detection distance of the sensor and the driver's visibility distance are limited, so that it is impossible to secure a safe distance ahead.

Therefore, when the driver drives manually but it is not possible to secure a safe distance ahead due to foggy conditions, the safety controller may establish a response strategy (e.g., decelerating, turning on emergency lights and/or lights and orientation angle adjustment, klaxon) to avoid accidents.

That is, the safety controller outputs a countermeasure to reduce the speed by receiving information from the vehicle while stopping or driving from the front through the edge infrastructure or to prevent an accident that may occur in situations where the visibility is limited due to fog, such as turning on emergency lights, outputting high beams, etc. in advance.

FIG. 8 is a diagram illustrating step S420, and FIG. 9 is a diagram illustrating an example of a safety process. Here, step S420 is a more detailed subdivision of step S380.

Referring to FIG. 8, step S420 includes step S421 of driving the safety zone emergency stop safety process, step S422 of checking the autonomous driving system function, step S423 of establishing a safety response strategy in conjunction with edge infrastructure, step S424 of outputting a response strategy, and step S425 of emergency stop in a safety zone.

Step S421 is a step of starting the emergency stop safety zone safety process.

Step S422 is a step in which the safety controller detects whether the autonomous driving system 100 is partially operated. For example, the safety controller detects whether each of the components related to a scenario of the safety zone emergency stop operates, among the hardware, software, network equipment, and vehicle functions of the autonomous driving system 100 and detects whether the corresponding scenario is executed.

Step S423 is a step in which the safety controller establishes a response strategy according to the safety zone emergency stop scenario in conjunction with the edge infrastructure. For example, the safety controller checks location information of the safety zone from the vehicle while stopping or driving in front through the edge infrastructure, or collects the location information of the safety zone through self-sensing information.

Step S424 is a step of controlling the vehicle according to the established response strategy and surrounding situation information by the safety controller. For example, if it is difficult to switch control right or autonomous driving due to a fallback situation, the safety controller sets a route to the safety zone and controls the vehicle according to the presence of nearby vehicles and/or pedestrians.

In step S425, the safety controller moves the vehicle to a safety zone and then makes an emergency stop, and transmits situation information including location and failure through edge infrastructure and emergency call to a set terminal (e.g., insurance company, tow truck, police, fire station).

A specific example of such a safety zone emergency stop process will be described with reference to FIG. 9.

Referring to FIG. 9, the safety zone emergency stop scenario will be described through roads divided into zones (A) and (B). On the corresponding road, autonomous driving is operating normally through edge infrastructure linkage in zone (A), and a sudden heavy rain falls outside the scope of the vehicle's ODD while driving in zone (B), resulting in a fallback situation.

It is a situation in which autonomous driving control is possible, and it is impossible to switch the driver's control right and establish a minimal risk strategy for the autonomous driving system 100 d.

Therefore, the safety controller of the autonomous vehicle confirms the safety zone based on the edge infrastructure interworking and autonomous vehicle sensor information. Also, the safety controller makes an emergency stop in the confirmed safety zone by setting a route and controlling speed in response to the surrounding conditions, such as road conditions, the presence of nearby vehicles and structures, the presence of pedestrians, and weather.

Here, the safety controller transmits lane change or emergency stop information due to the fallback situation of the vehicle to a vehicle in the rear or a next lane through the edge infrastructure to prevent contact with surrounding vehicles and collision accidents in advance.

In this case, in the case of nearby autonomous vehicles, the autonomous driving system 100 may receive the occurrence of a fallback situation in a vehicle in the next lane and propagate it to other connected vehicles. Therefore, the vehicles in the next lane or rear that received the information before the lane change of the vehicle in which the fallback situation occurred may decelerate or change the lane in advance, so that a chain collision accident due to rapid deceleration or sudden lane change may be prevented in advance.

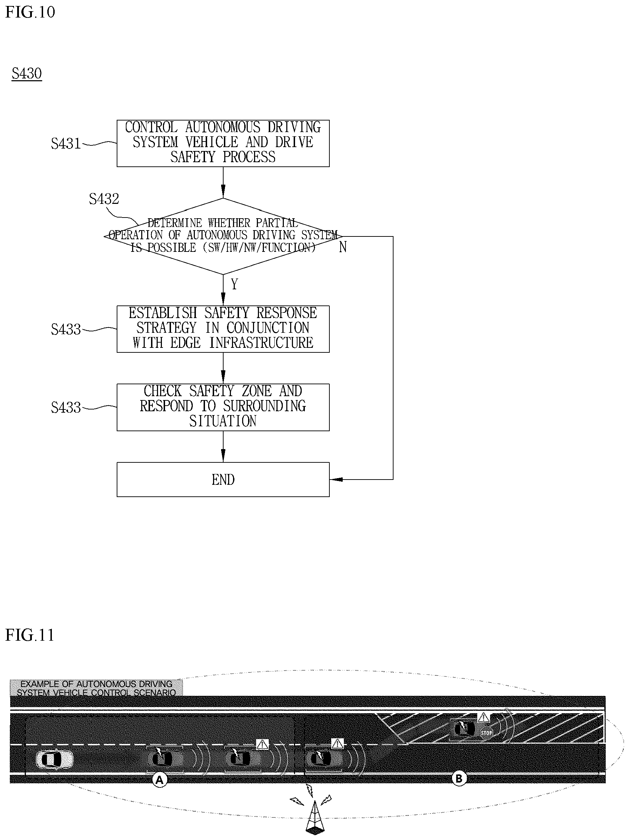

FIG. 10 is a flowchart illustrating step S430, and FIG. 11 is a diagram illustrating an example of an autonomous vehicle control safety process.

Referring to FIG. 10, step S430 includes step S431 of activating the autonomous vehicle control safety process, step S432 of detecting whether a partial operation of the autonomous driving system 100 is performed, and step S433 of establishing a safety response strategy by interworking with edge infrastructure, and step S434 of controlling the vehicle according to the presence or absence of a safety zone and surrounding conditions.

Step S431 is a step in which the safety controller drives the autonomous vehicle control safety process. Here, if it is possible to establish a minimal risk strategy of the autonomous driving system 100 in step S330 in a fallback situation in which autonomous driving control is possible but it is impossible to switch control right to the driver through steps S310 and S320, a safety process for maintaining vehicle control of the autonomous driving system 100 is driven in step S370 (step S431).

Step S432 is a step in which the safety controller detects whether the autonomous driving system 100 is partially operated. For example, the safety controller detects whether to execute the corresponding scenario by detecting whether each component related to the vehicle control scenario of the autonomous driving system 100, among hardware, software, network equipment, and vehicle functions of the autonomous driving system 100, operates.

Step S433 is a step in which the safety controller 300 establishes a safety response strategy by interworking with the edge infrastructure according to a scenario according to the autonomous driving system 100 vehicle control safety process. Here, the safety controller 300 establishes a response strategy by collecting surrounding situation information (road, traffic, location, temperature, weather) from the front and/or surrounding autonomous vehicles or terminals connected to edge infrastructure through the edge infrastructure.

Here, the safety response strategy may include a safety zone that may be moved from the current location, a movement route and possibility from the current state to a destination (a set destination or a safety zone), and a callable dispatch service company or organization.

Step S434 is a step in which the safety controller executes the established response strategy based on the collected information. Here, the safety controller may control the vehicle according to the surrounding situation to drive the vehicle to a destination established by the response strategy. The destination established by the response strategy may be a safety zone, an initially set destination, a company that may make an emergency call or repair, a medical institution, a police station, and the like.

In addition, the safety controller may propagate a fallback situation to nearby vehicles or terminals or transmit emergency call information through the edge infrastructure.

Step S430 will be described through the example of FIG. 11.

FIG. 11 is a diagram illustrating an example of vehicle control of the autonomous driving system 100.

Referring to FIG. 11, the road may be divided into zone (A) and zone (B). In zone (A), while the autonomous vehicle is operating normally through the edge infrastructure linkage, the lane keeping function among the autonomous driving functions fails, resulting in a fallback situation.

The autonomous vehicle in zone A, where the fallback situation has occurred, is currently in a situation where autonomous driving control is possible, but it is impossible to switch the driver's control right, so it is possible to establish a minimal risk strategy for the autonomous driving system 100.

Therefore, the corresponding autonomous vehicle was able to confirm that there is a safety zone in zone (B) by checking the surrounding situation and location information through the edge infrastructure.

Therefore, the corresponding vehicle establishes a response strategy including a movement route to the safety zone in zone B through the vehicle low-speed driving control of the lanemaintaining autonomous driving system 100 of the vehicle, and moves to the corresponding safety zone at low speed according to the established response strategy, arrived, and made an emergency stop.

That is, according to the present invention, in a situation where switching of the driver's control right is impossible in a fallback situation, the present invention may establish a response strategy on its own, move to a safety zone, and make an emergency stop to promote the safety of passengers. At this time, the response strategy may include preventing accidents while moving to the safety zone, propagation of the fallback situation information and movement route to nearby vehicles for the safety of passengers and for quick accident and breakdown repair, and emergency call to the police, maintenance companies, tow trucks and/or the fire station.

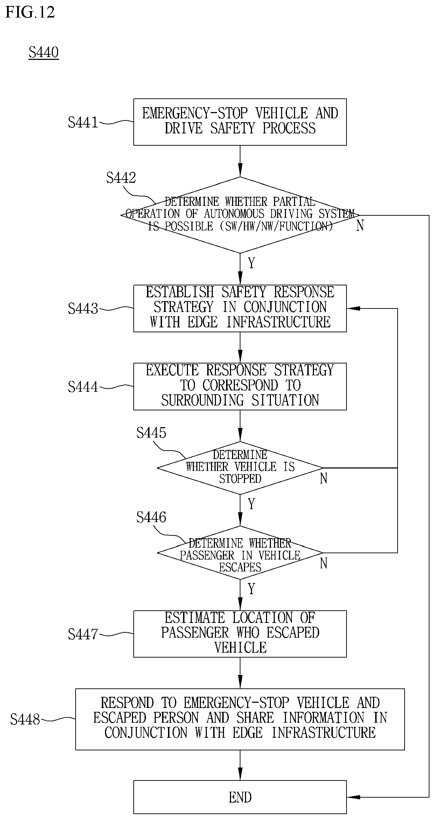

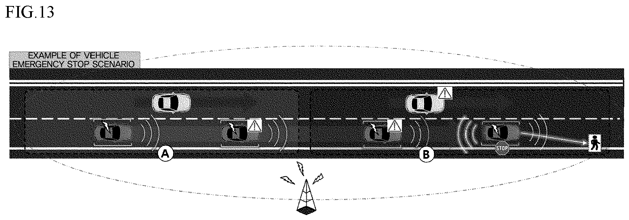

Step S440 will be described with reference to FIGS. 12 and 13.

FIG. 12 is a flowchart illustrating step S440, which relates to an essential scenario of the present invention as claimed, and FIG. 13 is a diagram illustrating an example of step S440.

Referring to FIG. 12, step S440 includes step S441 of driving the vehicle emergency stop safety process, step S442 of detecting whether the autonomous driving system 100 is partially operated, step S443 of establishing a response strategy, step S444 of executing a response strategy in response to the surrounding situation, step S445 of detecting whether the vehicle is stopped, step S446 of detecting whether or not escaping, step S446 of estimating a location of an escaped passenger, and step S447 of sharing information.

Step S441 is a step in which the safety controller executes the vehicle emergency stop safety process. In the state in which the control of autonomous driving is possible or impossible (S310), if the safety controller cannot switch the driver's control right (S320, S350), it is impossible to establish a minimal risk strategy of the autonomous driving system 100 (S330), and it is difficult to secure an emergency stop safety zone (S340), the safety controller initiates the vehicle emergency stop safety process.

Step S442 is a step in which the safety controller detects whether essential components for performing the vehicle emergency stop safety process are operating.

Step S443 is a step in which the safety controller establishes a response strategy by collecting information on the surrounding situation in conjunction with the edge infrastructure. The safety controller establishes an executable response strategy by receiving surrounding information (road, traffic, current location, weather, emergency callable maintenance company and/or organization information) in conjunction with the edge infrastructure.

Step S444 is a step in which the safety controller executes a response strategy in response to the surrounding situation. For example, if it is difficult to control the vehicle in a situation where it is difficult to secure a safety zone, the safety controller may stop the vehicle by checking the presence or absence of the vehicle in the front and rear and/or adjacent lanes through the edge infrastructure.

Alternatively, when there is a vehicle in the next lane or rear, the current situation is propagated through the edge infrastructure and when a sufficient inter-vehicle distance is secured, the vehicle may make an emergency stop or may be controlled to make an emergency stop after a lane change.

Step S445 is a step in which the safety controller detects whether the vehicle is stopped. The safety controller detects whether the vehicle is stopped through sensing information installed in the vehicle and edge infrastructure.

Step S446 is a step in which the safety controller detects whether the passenger has escaped.

Step S447 is a step in which the safety controller estimates a location of the passenger who has escaped from the vehicle. The safety controller receives and estimates location information of a passenger who has escaped out of the vehicle from other vehicles in the front and rear and driving vehicles in the next lane through its own sensing information and/or edge infrastructure.

Step S448 is a step in which the safety controller shares information on the location of the passenger and the emergency stop current location information with the vehicle moving around the passenger and/or vehicles scheduled to move around the passenger in conjunction with the edge infrastructure.

That is, the present invention may help, by the an essential scenario of the present invention as claimed, to prevent a secondary accident in advance by sharing the location of the passenger who escaped after the emergency stop and the information of the emergency stop vehicle with surrounding vehicles through the edge infrastructure.

In addition, the response strategy in the present invention may automatically transmit information to an organization or terminal capable of emergency dispatch, such as a dispatch company, police, or fire station after emergency stop of the vehicle as described above.

FIG. 13 is a diagram illustrating a specific example of the above step S440.

Referring to FIG. 13, a road to which the vehicle emergency stop scenario is applied may be divided into a zone (A) and a zone (B).

In the zone (A), a malfunction of the autonomous driving software is discovered while the autonomous vehicle is operating normally through interworking with the edge infrastructure, resulting in a fallback situation.

Therefore, due to the malfunction of the SW function, the failure of the autonomous driving function (lane recognition function) is duplicated, and the vehicle cannot go to the safety zone in a very dangerous situation.

Therefore, the corresponding autonomous vehicle is in a situation in which autonomous driving control is possible, in a situation in which it is impossible to switch the driver's control right, and in a situation in which it is impossible to establish a minimal risk strategy for the autonomous driving system 100, and the vehicle emergency stop scenario is driven.

Therefore, the vehicle makes an emergency stop on the road through interworking with the edge infrastructure, and the driver and passenger in the vehicle attempt an emergency escape.

At this time, the safety controller tracks a location of the escaped driver and secures the driver's safety by providing information to the edge infrastructure and surrounding vehicles.

Therefore, the present invention may secure the safety of the driver who escapes to the shoulder of the road through the sharing of the driver's location information in environmental variables (night road, fog, etc., where it is difficult to secure a forward view).

While the present invention has been described with reference to the accompanying drawings, it is to be understood that the scope of the present invention is defined by the claims described hereinafter and should not be construed as being limited to the above-described embodiments and/or drawings. It is to be clearly understood that improvements, changes, and modifications that are obvious to those skilled in the art are also within the scope of the present invention as defined in the appended claims.

## Claims

1. An autonomous driving safety control system based on edge infrastructure, the autonomous driving safety control system comprising:
an autonomous driving system (100) controlling autonomous driving;
an error detection unit (200) detecting a fallback situation; and
a safety controller (300) driving a safety process for each fallback situation by interworking with an edge infrastructure when a fallback situation occurs,
wherein, when the error detection unit (200) detects a fallback situation in which it is impossible to switch a driving control right to a driver, and either autonomous driving of the autonomous driving system (100) is impossible, or a fallback minimal risk maneuver, MRM, set in the autonomous driving system (100) itself is impossible and location information of a safety zone where an emergency stop is possible is not received,
the safety controller (300) makes an emergency stop by controlling the autonomous driving system (100) in conjunction with the edge infrastructure, transmits the fallback situation and location information generated by detecting a location of a passenger who escapes to the outside of the vehicle, and shares the location information of the passenger through the edge infrastructure.

2. The autonomous driving safety control system of claim 1, wherein
the safety process includes at least one of
safety zone emergency stop scenario including location and movement route to a safety zone in conjunction with the edge infrastructure;
a vehicle control scenario of autonomous driving system (100) maintaining autonomous driving;
an emergency stop scenario for emergency-stopping the vehicle; and
a driver control switching scenario in which a control right of the autonomous vehicle is switched to a driver to guide a location and route of a safety zone.

3. The autonomous driving safety control system of claim 1, wherein
the error detection unit (200) includes:
an operation design domain (ODD) detection module detecting a malfunction of an ODD that defines a specific operating condition of an automated driving system (ADS);
a hardware detection module (220) detecting a malfunction of hardware installed in the autonomous vehicle;
a network detection module (230) detecting a malfunction of network equipment in the autonomous vehicle;
a software detection module (240) detecting a malfunction of software by detecting an amount and type of data transmitted and received between each hardware in the autonomous driving system (100); and
a driving control detection module (250) detecting a malfunction in at least one of longitudinal to lateral control, stop, and speed control of the vehicle as an operation of the autonomous driving system (100).

4. The autonomous driving safety control system of claim 1, wherein,
when the error detection unit (200) detects a fallback situation in which it is possible to perform autonomous driving of the autonomous driving system (100) and to switch a control right to driver,
the safety controller (300) switches the driving control right of the autonomous driving system (100) to a driver and
establishes and outputs a response strategy including at least one of a set destination, a movement route to a safety zone, and information on a company that can be called in an emergency by interworking with the edge infrastructure.

5. The autonomous driving safety control system of claim 1, wherein,
when a detection signal of a fallback situation in which autonomous driving is impossible and it is possible to switch a driving control right to a driver is received from the error detection unit (200),
the safety controller (300) switches a driving control right of the autonomous driving system (100) to a driver and establishes and outputs a response strategy including at least one of a set destination, a route to a safety zone, and information on a company that can be called in an emergency by interworking with the edge infrastructure.

6. The autonomous driving safety control system of claim 1, wherein,
when the error detection unit (200) detects a fallback situation in which it is impossible to switch a driving control right to a driver and it is possible to establish a fallback MRM set in the autonomous driving system (100), the safety controller (300) maintains vehicle control in the autonomous driving system (100).

7. The autonomous driving safety control system of claim 1, wherein,
when the error detection unit (200) detects a fallback situation in which it is impossible to switch a driving control right to a driver and to establish and execute a fallback MRM set in the autonomous driving system (100) itself,
the safety controller (300) requests and receives location information of a safety zone where emergency stop is possible through the edge infrastructure to move the vehicle to the safety zone and emergency-stop the vehicle by controlling the autonomous driving system (100).

8. An autonomous driving safety control method based on edge infrastructure, the method comprising:
a) controlling an autonomous vehicle in an autonomous driving system (100);
b) detecting a fallback situation during autonomous driving; and
c) selecting any one of a plurality of scenarios set for fallback situations, and performing a safety process according to the selected scenario,
wherein, in c), when a fallback situation is detected in which it is impossible to switch a driving control right to a driver in b), and in which either autonomous driving of the autonomous driving system (100) is impossible, or in which a fallback minimal risk maneuver, MRM, set in the autonomous driving system (100) itself is impossible in b) and a location of a safety zone in which emergency stop is possible has not been found by searching for said location of a safety zone through the edge infrastructure and self-sensing,
the safety process is controlling and emergency-stopping the autonomous driving system (100) by interworking with the edge infrastructure, transmitting the fallback situation and location information generated by detecting a location of a passenger who escapes to the outside of the vehicle, and sharing the location information of the passenger through the edge infrastructure.

9. The autonomous driving safety control method of claim 8, wherein,
in b), a fallback situation is detected through whether at least one of an operation design domain (ODD), hardware, software, network, vehicle control device, and autonomous driving function operates.

10. The autonomous driving safety control method of claim 8, wherein
c) includes:
when a fallback situation is detected in which it is possible to perform autonomous driving of the autonomous driving system (100) and to switch a control right to driver in b), switching the driving control right of the autonomous driving system (100) to a driver; and
establishing and outputting a response strategy including at least one of a set destination, a movement route to a safety zone, and information on a company that can be called in an emergency by interworking with the edge infrastructure.

11. The autonomous driving safety control method of claim 8, wherein
c) includes
when a fallback situation is detected in which autonomous driving is impossible and it is possible to switch a driving control right to a driver in b), switching a driving control right of the autonomous driving system (100) to a driver; and
establishing and outputting a response strategy including at least one of a set destination, a movement route to a safety zone, and information on a company that can be called in an emergency by interworking with the edge infrastructure.

12. The autonomous driving safety control method of claim 8, wherein
c) further includes:
when a fallback situation is detected in which it is impossible to switch a driving control right to a driver and it is possible to establish a fallback MRM set in the autonomous driving system (100) in b),
maintain vehicle control in the autonomous driving system (100) by receiving sensed information from front and rear vehicles through the edge infrastructure.

13. The autonomous driving safety control method of claim 8, wherein
c) includes:
when a fallback situation is detected in which it is impossible to switch a driving control right to a driver and to establish and execute a fallback MRM set in the autonomous driving system (100) itself in b), requesting and receiving location information of a safety zone where emergency stop is possible through the edge infrastructure; and
controlling the autonomous driving system (100) to move to a safety zone received through the edge infrastructure and making an emergency stop in the safety zone.

## Patentansprüche

1. Autonomes Fahrsicherheits-Steuerungssystem auf der Basis von Edge-Infrastruktur, wobei das autonome Fahrsicherheits-Steuerungssystem Folgendes umfasst:
ein autonomes Fahrsystem (100), das autonomes Fahren steuert;
eine Fehlererfassungseinheit (200), die eine Rückfallsituation erfasst; und
eine Sicherheitssteuerung (300), die einen Sicherheitsprozess für jede Rückfallsituation steuert, indem sie mit einer Edge-Infrastruktur zusammenarbeitet, wenn eine Rückfallsituation auftritt,
wobei, wenn die Fehlererfassungseinheit (200) eine Rückfallsituation erfasst, in der es unmöglich ist, ein Fahrsteuerungsrecht auf einen Fahrer umzuschalten, und entweder autonomes Fahren des autonomen Fahrsystems (100) unmöglich ist oder ein Rückfallmanöver mit minimalem Risiko, MRM, das in dem autonomen Fahrsystem (100) eingestellt ist, selbst unmöglich ist und Standortinformationen einer Sicherheitszone, in der ein Nothalt möglich ist, nicht empfangen werden,
die Sicherheitssteuerung (300) einen Nothalt durchführt, indem sie das autonome Fahrsystem (100) in Verbindung mit der Edge-Infrastruktur steuert, die Rückfallsituation und die Standortinformationen überträgt, die durch Erfassen eines Standorts eines Fahrgasts, der nach außerhalb des Fahrzeugs flieht, erzeugt werden, und die Standortinformationen des Fahrgastes über die Edge-Infrastruktur weitergibt.

2. Autonomes Fahrsicherheits-Steuerungssystem nach Anspruch 1, wobei
der Sicherheitsprozess mindestens eines von Folgendem umfasst:
ein Sicherheitszonen-Nothaltszenario, das den Standort und die Bewegungsroute zu einer Sicherheitszone in Verbindung mit der Edge-Infrastruktur enthält;
ein Fahrzeugsteuerungsszenario eines autonomen Fahrsystems (100), das das autonome Fahren aufrecht erhält;
ein Nothaltszenario zum Nothalten des Fahrzeugs; und
ein Fahrersteuerungs-Umschaltszenario, bei dem ein Steuerungsrecht des autonomen Fahrzeugs auf einen Fahrer umgeschaltet wird, um einen Standort und eine Route einer Sicherheitszone zu führen.

3. Autonomes Fahrsicherheits-Steuerungssystem nach Anspruch 1, wobei
die Fehlererfassungseinheit (200) enthält:
ein Operational-Design-Domain-(ODD)-Erfassungsmodul, das eine Fehlfunktion einer ODD erfasst, die eine spezifische Betriebsbedingung eines automatisierten Fahrsystems (ADS) definiert;
ein Hardware-Erfassungsmodul (220), das eine Fehlfunktion einer im autonomen Fahrzeug installierten Hardware erfasst;
ein Netzwerkerfassungsmodul (230), das eine Fehlfunktion der Netzwerkausrüstung des autonomen Fahrzeugs erfasst;
ein Softwareerfassungsmodul (240), das eine Fehlfunktion der Software erfasst, indem es eine Menge und einen Typ von Daten erfasst, die zwischen jeder Hardware in dem autonomen Fahrsystem (100) übertragen und empfangen werden; und
ein Fahrsteuerungs-Erfassungsmodul (250), das eine Fehlfunktion in mindestens einem von Längs- bis Quersteuerung, Anhalten und Geschwindigkeitssteuerung des Fahrzeugs als einen Vorgang des autonomen Fahrsystems (100) erfasst.

4. Autonomes Fahrsicherheits-Steuerungssystem nach Anspruch 1, wobei,
wenn die Fehlererfassungseinheit (200) eine Rückfallsituation erfasst, in der es möglich ist, das autonome Fahren des autonomen Fahrsystems (100) durchzuführen und ein Steuerungsrecht auf den Fahrer umzuschalten,
die Steuerung (300) das Steuerungsrecht des autonomen Fahrsystems (100) auf einen Fahrer umschaltet und
eine Reaktionsstrategie, die mindestens eines von einem festgelegten Ziel, einer Bewegungsroute zu einer Sicherheitszone und von Informationen über ein Unternehmen, das in einem Notfall angerufen werden kann, umfasst, durch Zusammenarbeiten mit der Edge-Infrastruktur erstellt und ausgibt.

5. Autonomes Fahrsicherheits-Steuerungssystem nach Anspruch 1, wobei,
wenn von der Fehlererfassungseinheit (200) ein Erfassungssignal für eine Rückfallsituation empfangen wird, in der ein autonomes Fahren nicht möglich ist und es möglich ist, ein Fahrsteuerungsrecht auf einen Fahrer umzuschalten,
die Sicherheitssteuerung (300) ein Fahrsteuerungsrecht des autonomen Fahrsystems (100) auf einen Fahrer umschaltet und eine Reaktionsstrategie, die mindestens eines von einem festgelegten Ziel, einer Route zu einer Sicherheitszone und von Informationen über ein Unternehmen, das in einem Notfall angerufen werden kann, umfasst, durch Zusammenarbeiten mit der Edge-Infrastruktur erstellt und ausgibt.

6. Autonomes Fahrsicherheits-Steuerungssystem nach Anspruch 1, wobei,
wenn die Fehlererfassungseinheit (200) eine Rückfallsituation erfasst, in der es nicht möglich ist, ein Fahrsteuerungsrecht auf einen Fahrer umzuschalten, und es möglich ist, ein Rückfall-MRM, das im autonomen Fahrsystem (100) eingestellt ist, zu erstellen, die Sicherheitssteuerung (300) die Fahrzeugsteuerung im autonomen Fahrsystem (100) aufrecht erhält.

7. Autonomes Fahrsicherheits-Steuerungssystem nach Anspruch 1, wobei,
wenn die Fehlererfassungseinheit (200) eine Rückfallsituation erfasst, in der es nicht möglich ist, ein Fahrsteuerungsrecht auf einen Fahrer umzuschalten und ein Rückfall-MRM, das im autonomen Fahrsystem (100) eingestellt ist, selbst zu erstellen und auszuführen,
die Sicherheitssteuerung (300) über die Edge-Infrastruktur Standortinformationen einer Sicherheitszone anfordert und empfängt, in der ein Nothalt möglich ist, um das Fahrzeug in die Sicherheitszone zu bewegen und das Fahrzeug durch Steuern des autonomen Fahrsystems (100) notzustoppen.

8. Verfahren zur Steuerung autonomer Fahrersicherheit basierend auf Edge-Infrastruktur, wobei das Verfahren Folgendes umfasst:
a) Steuern eines autonomen Fahrzeugs in einem autonomen Fahrsystem (100);
b) Erfassen einer Rückfallsituation während des autonomen Fahrens; und
c) Auswählen eines einer Vielzahl von Szenarien, die für Rückfallsituationen eingestellt sind, und Durchführen eines Sicherheitsprozesses entsprechend dem ausgewählten Szenario,
wobei in c), wenn eine Rückfall-Situation erfasst wird, in der es unmöglich ist, ein Fahrsteuerungsrecht auf einen Fahrer in b) umzuschalten, und in der entweder autonomes Fahren des autonomen Fahrsystems (100) unmöglich ist, oder in der ein Rückfallmanöver mit minimalem Risiko, MRM, das in dem autonomen Fahrsystem (100) eingestellt ist, in b) selbst unmöglich ist, und ein Standort einer Sicherheitszone, in der ein Nothalt möglich ist, nicht durch Suchen nach dem besagten Standort einer Sicherheitszone durch die Edge-Infrastruktur und Selbsterfassung gefunden worden ist,
der Sicherheitsprozess das autonome Fahrsystem (100) durch Zusammenwirken mit der Edge-Infrastruktur steuert und notstoppt, die Rückfallsituation und die Standortinformationen, die durch Erfassen eines Standorts eines Fahrgastes erzeugt werden, der nach außerhalb des Fahrzeugs flieht, überträgt und die Standortinformationen des Fahrgastes durch die Edge-Infrastruktur weitergibt.

9. Verfahren zur Steuerung autonomer Fahrersicherheit nach Anspruch 8, wobei,
in b) eine Rückfallsituation dadurch erfasst wird, ob mindestens eines von einer Operational-Design-Domain (ODD), Hardware, Software, Netzwerk, Fahrzeugsteuerungsvorrichtung und autonomer Fahrfunktion funktioniert.

10. Verfahren zur Steuerung autonomer Fahrsicherheit nach Anspruch 8, wobei
c) umfasst:
wenn eine Rückfallsituation erfasst wird, in der es möglich ist, das autonome Fahren des autonomen Fahrsystems (100) durchzuführen und ein Steuerungsrecht auf den Fahrer in b) umzuschalten, Umschalten des Fahrsteuerungsrechts des autonomen Fahrsystems (100) auf einen Fahrer; und
Erstellen und Ausgeben einer Reaktionsstrategie, die mindestens eines von einem festgelegten Ziel, einer Bewegungsroute zu einer Sicherheitszone und von Informationen über ein Unternehmen, das in einem Notfall angerufen werden kann, umfasst, durch Zusammenwirken mit der Edge-Infrastruktur.

11. Verfahren zur Steuerung autonomer Fahrsicherheit nach Anspruch 8, wobei
c) umfasst:
wenn eine Rückfallsituation erfasst wird, in der autonomes Fahren unmöglich ist und es möglich ist, in b) ein Fahrsteuerungsrecht auf einen Fahrer umzuschalten, Umschalten eines Fahrsteuerungsrechts des autonomen Fahrsystems (100) auf einen Fahrer; und
Erstellen und Ausgeben einer Reaktionsstrategie, die mindestens eines von einem festgelegten Ziel, einer Bewegungsroute zu einer Sicherheitszone und von Informationen über ein Unternehmen, das in einem Notfall angerufen werden kann, umfasst, durch Zusammenwirken mit der Edge-Infrastruktur.

12. Verfahren zur Steuerung autonomer Fahrsicherheit nach Anspruch 8, wobei
c) ferner umfasst:
wenn eine Rückfallsituation erfasst wird, in der es nicht möglich ist, ein Fahrsteuerungsrecht auf einen Fahrer umzuschalten, und es möglich ist, in b) ein Rückfall-MRM, das im autonomen Fahrsystem (100) eingestellt ist, zu erstellen,
Aufrechterhalten der Fahrzeugsteuerung im autonomen Fahrsystem (100) durch Empfangen von erfassten Informationen von vorderen und hinteren Fahrzeugen durch die Edge-Infrastruktur.

13. Verfahren zur Steuerung autonomer Fahrsicherheit nach Anspruch 8, wobei
c) umfasst:
wenn eine Rückfallsituation erfasst wird, in der es nicht möglich ist, ein Fahrsteuerungsrecht auf einen Fahrer umzuschalten und ein Rückfall-MRM, das im autonomen Fahrsystem (100) eingestellt ist, in b) selbst zu erstellen und auszuführen, Anfordern und Empfangen von Standortinformationen einer Sicherheitszone, in der ein Nothalt möglich ist, über die Edge-Infrastruktur; und
Steuern des autonomen Fahrsystems (100) so, dass es sich in eine über die Edge-Infrastruktur empfangene Sicherheitszone bewegt und in der Sicherheitszone einen Nothalt durchführt.

## Revendications

1. Système de commande de sécurité de conduite autonome sur la base d'infrastructure périphérique, le système de commande de sécurité de conduite autonome comprenant :
un système de conduite autonome (100) commandant la conduite autonome ;
une unité de détection d'erreur (200) détectant une situation de repli ; et
une commande de sécurité (300) commandant un processus de sécurité pour chaque situation de repli en interagissant avec une infrastructure périphérique lorsqu'une situation de repli se produit,
dans lequel, lorsque l'unité de détection d'erreur (200) détecte une situation de repli dans laquelle il est impossible de commuter un droit de commande de conduite à un conducteur, et soit la conduite autonome du système de conduite autonome (100) est impossible, soit une manoeuvre à risque minimal de repli, MRM, définie dans le système de conduite autonome (100) lui-même est impossible et des informations de lieu d'une zone de sécurité dans laquelle un arrêt d'urgence est possible ne sont pas reçues,
la commande de sécurité (300) effectue un arrêt d'urgence en commandant le système de conduite autonome (100) conjointement avec l'infrastructure périphérique, transmet la situation de repli et des informations de lieu générées par la détection d'un lieu d'un passager qui s'échappe à l'extérieur du véhicule, et partage les informations de lieu du passager par l'intermédiaire de l'infrastructure périphérique.

2. Système de commande de sécurité de conduite autonome de la revendication 1, dans lequel
le processus de sécurité comprend au moins l'un de ce qui suit
un scénario d'arrêt d'urgence de zone de sécurité comprenant le lieu et l'itinéraire de déplacement vers une zone de sécurité conjointement avec l'infrastructure périphérique ;
un scénario de commande de véhicule du système de conduite autonome (100) maintenant la conduite autonome ;
un scénario d'arrêt d'urgence pour l'arrêt d'urgence du véhicule ; et
un scénario de commutation de commande de conducteur dans lequel un droit de commande du véhicule autonome est commuté à un conducteur pour guider un lieu et un itinéraire d'une zone de sécurité.

3. Système de commande de sécurité de conduite autonome de la revendication 1, dans lequel
l'unité de détection d'erreur (200) comprend
un module de détection de domaine de conception d'opération (ODD) détectant un dysfonctionnement d'un ODD qui définit une condition de fonctionnement spécifique d'un système de conduite automatisé (ADS) ;
un module de détection de hardware (220) détectant un dysfonctionnement de hardware installé dans le véhicule autonome ;
un module de détection de réseau (230) détectant un dysfonctionnement d'équipement de réseau dans le véhicule autonome ;
un module de détection de logiciel (240) détectant un dysfonctionnement de logiciel en détectant une quantité et un type de données transmises et reçues entre chaque hardware du système de conduite autonome (100) ; et
un module de détection de commande de conduite (250) détectant un dysfonctionnement dans au moins un de commande longitudinale à latérale, d'arrêt et de commande de vitesse du véhicule en tant qu'opération du système de conduite autonome (100).

4. Système de commande de sécurité de conduite autonome de la revendication 1, dans lequel,
lorsque l'unité de détection d'erreur (200) détecte une situation de repli dans laquelle il est possible d'effectuer la conduite autonome du système de conduite autonome (100) et de commuter un droit de commande sur le conducteur,
la commande de sécurité (300) commute le droit de commande de conduite du système de conduite autonome (100) à un conducteur et
établit et émet une stratégie de réponse comprenant au moins un parmi une destination définie, un itinéraire de déplacement vers une zone de sécurité et des informations sur une entreprise pouvant être appelée en cas d'urgence, en interagissant avec l'infrastructure périphérique.

5. Système de commande de sécurité de conduite autonome de la revendication 1, dans lequel,
lorsqu'un signal de détection d'une situation de repli dans laquelle la conduite autonome est impossible et qu'il est possible de commuter un droit de commande de conduite à un conducteur est reçu depuis l'unité de détection d'erreur (200),
la commande de sécurité (300) commute un droit de commande de conduite du système de conduite autonome (100) à un conducteur et établit et émet une stratégie de réponse comprenant au moins un parmi une destination définie, un itinéraire vers une zone de sécurité et des informations sur une entreprise pouvant être appelée en cas d'urgence, en interagissant avec l'infrastructure périphérique.

6. Système de commande de sécurité de conduite autonome de la revendication 1, dans lequel,
lorsque l'unité de détection d'erreur (200) détecte une situation de repli dans laquelle il est impossible de commuter un droit de commande de conduite à un conducteur et qu'il est possible d'établir une MRM de repli définie dans le système de conduite autonome (100), la commande de sécurité (300) maintient la commande du véhicule dans le système de conduite autonome (100).

7. Système de commande de sécurité de conduite autonome de la revendication 1, dans lequel,
lorsque l'unité de détection d'erreur (200) détecte une situation de repli dans laquelle il est impossible de commuter un droit de commande de conduite à un conducteur et d'établir et d'exécuter une MRM de repli définie dans le système de conduite autonome (100) lui-même,
la commande de sécurité (300) demande et reçoit des informations de lieu d'une zone de sécurité où l'arrêt d'urgence est possible par l'intermédiaire de l'infrastructure périphérique pour déplacer le véhicule vers la zone de sécurité et arrêter d'urgence le véhicule en commandant le système de conduite autonome (100).

8. Procédé de commande de sécurité de conduite autonome sur la base d'infrastructure périphérique, le procédé comprenant :
a) commander un véhicule autonome dans un système de conduite autonome (100) ;
b) détecter une situation de repli pendant la conduite autonome ; et
c) sélectionner un scénario parmi une pluralité de scénarios définis pour des situations de repli, et exécuter un processus de sécurité en fonction du scénario sélectionné,
dans lequel, en c), lorsqu'une situation de repli est détectée dans laquelle il est impossible de commuter un droit de commande de conduite à un conducteur en b), et dans laquelle soit la conduite autonome du système de conduite autonome (100) est impossible, soit une manoeuvre de repli à risque minimal (MRM) définie dans le système de conduite autonome (100) lui-même est impossible en b) et qu'un lieu d'une zone de sécurité dans laquelle un arrêt d'urgence est possible n'a pas été trouvé en recherchant ledit lieu d'une zone de sécurité par l'intermédiaire de l'infrastructure périphérique et de l'autodétection,
le processus de sécurité consiste à commander et arrêter d'urgence le système de conduite autonome (100) en interagissant avec l'infrastructure périphérique, transmettre la situation de repli et les informations de lieu générées par la détection d'un lieu d'un passager qui s'échappe à l'extérieur du véhicule, et partager les informations de lieu du passager par l'intermédiaire de l'infrastructure périphérique.

9. Procédé de commande de sécurité de conduite autonome de la revendication 8, dans lequel,
en b), une situation de repli est détectée en fonction du fonctionnement ou non d'au moins un d'un domaine de conception d'opération (ODD), du hardware, du logiciel, du réseau, du dispositif de commande de véhicule et de la fonction de conduite autonome.

10. Procédé de commande de sécurité de conduite autonome de la revendication 8, dans lequel
c) comprend :
lorsqu'une situation de repli est détectée dans laquelle il est possible d'effectuer la conduite autonome du système de conduite autonome (100) et de commuter un droit de commande au conducteur en b), commuter le droit de commande de conduite du système de conduite autonome (100) à un conducteur ; et
établir et émettre une stratégie de réponse comprenant au moins un parmi une destination définie, un itinéraire de déplacement vers une zone de sécurité et des informations sur une entreprise pouvant être appelée en cas d'urgence, en interagissant avec l'infrastructure périphérique.

11. Procédé de commande de sécurité de conduite autonome de la revendication 8, dans lequel
c) comprend
lorsqu'une situation de repli est détectée dans laquelle la conduite autonome est impossible et qu'il est possible de commuter un droit de commande de conduite à un conducteur en b), commuter un droit de commande de conduite du système de conduite autonome (100) à un conducteur ; et
établir et émettre une stratégie de réponse comprenant au moins un parmi une destination définie, un itinéraire de déplacement vers une zone de sécurité et des informations sur une entreprise pouvant être appelée en cas d'urgence, en interagissant avec l'infrastructure périphérique.

12. Procédé de commande de sécurité de conduite autonome de la revendication 8, dans lequel
c) comprend en outre :
lorsqu'une situation de repli est détectée dans laquelle il est impossible de commuter un droit de commande de conduite à un conducteur et qu'il est possible d'établir une MRM de repli définie dans le système de conduite autonome (100) en b),
maintenir la commande de véhicule dans le système de conduite autonome (100) en recevant des informations reçues de véhicules avant et arrière par l'intermédiaire de l'infrastructure périphérique.

13. Procédé de commande de sécurité de conduite autonome de la revendication 8, dans lequel
c) comprend :
lorsqu'une situation de repli est détectée dans laquelle il est impossible de commuter un droit de commande de conduite à un conducteur et d'établir et d'exécuter une MRM de repli définie dans le système de conduite autonome (100) lui-même en b), demander et recevoir des informations de lieu d'une zone de sécurité où l'arrêt d'urgence est possible par l'intermédiaire de l'infrastructure périphérique ; et.
commander le système de conduite autonome (100) pour qu'il se déplace vers une zone de sécurité reçue par l'intermédiaire de l'infrastructure périphérique et effectuer un arrêt d'urgence dans la zone de sécurité.
